(19) Europäisches Patentamt
European Patent Office
Office européen des brevets

(11) **EP 3 374 801 B1**

(12) **FASCICULE DE BREVET EUROPEEN**

(45) Date de publication et mention de la délivrance du brevet:
**03.03.2021 Bulletin 2021/09**

(21) Numéro de dépôt: **16794661.5**

(22) Date de dépôt: **14.11.2016**

(51) Int Cl.:
***G01T 1/02*** *(2006.01)*

(86) Numéro de dépôt international:
**PCT/EP2016/077603**

(87) Numéro de publication internationale:
**WO 2017/081324 (18.05.2017 Gazette 2017/20)**

(54) **DISPOSITIF DE DÉTERMINATION D'UNE DOSE DÉPOSÉE ET PROCÉDÉ ASSOCIÉ**

VORRICHTUNG ZUR BESTIMMUNG EINER DEPONIERTEN DOSIS UND ZUGEHÖRIGES VERFAHREN

DEVICE FOR DETERMINING A DEPOSITED DOSE AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2015 FR 1560827**

(43) Date de publication de la demande:
**19.09.2018 Bulletin 2018/38**

(73) Titulaires:
• **Centre National de la Recherche Scientifique 75016 Paris (FR)**
• **Université de Strasbourg 67000 Strasbourg (FR)**

(72) Inventeurs:
• **JUNG, Jean-Marc 67205 Oberhausbergen (FR)**
• **TORRES RUIZ, Mauricio Nicolas 67100 Strasbourg (FR)**

(74) Mandataire: **IP Trust 2, rue de Clichy 75009 Paris (FR)**

(56) Documents cités:
**FR-A1- 2 981 757**

• **KV ETTINGER ET AL: "New Trends in scintillation detection for dose and radiation quality monitoring purposes", RADIATION PROTECTION DOSIMETRY, vol. 61, 1 janvier 1995 (1995-01-01), pages 13-18, XP055297116,**
• **Mélodie Munier: "NOUVELLES MOLECULES ORGANIQUES SCINTILLANTES A BASE DE LIQUIDES IONIQUES POUR LA DETECTION ET LA DISCRIMINATION DES RAYONNEMENTS NUCLEAIRES", , 3 novembre 2011 (2011-11-03), XP055297111, Extrait de l'Internet: URL:https://tel.archives-ouvertes.fr/tel-0 0671853/document**

## Description

La présente invention concerne un dispositif de détermination d'une dose déposée et un procédé de détermination de la dose déposée associé.

On connaît de EP 2 771 716 un dispositif de détermination de la dose déposée dans un scintillateur comprenant un premier photodétecteur et un deuxième photodétecteur, le deuxième photodétecteur fonctionnant en régime de comptage unique. La dose déposée dans le scintillateur par le rayonnement ionisant est déduite du nombre d'événements de coïncidence comptés par le dispositif, chaque évènement de coïncidence correspondant à la détection d'un photon par le premier photodétecteur, suivie de la détection d'un photon par le deuxième photodétecteur fonctionnant en régime de comptage de photon unique.

Ce dispositif est coûteux à fabriquer en raison de la présence de deux photodétecteurs. De plus, il nécessite une électronique d'analyse et de comptage relativement complexe, ce qui le rend très consommateur en énergie. Enfin, sa sensibilité est limitée du fait de son fonctionnement par comptage d'événements de coïncidence, qui ne tient compte que d'une petite partie de l'information disponible.

Un objet de l'invention est de fournir un dispositif permettant de déterminer en temps réel la dose déposée dans un scintillateur par un rayonnement ionisant avec une sensibilité plus élevée et à moindre coût.

A cet effet, l'invention concerne un dispositif de détermination d'une dose déposée dans un scintillateur par un rayonnement ionisant, comprenant :

- un scintillateur configuré pour être irradié par le rayonnement ionisant et propre à émettre des photons de scintillation lors de l'interaction avec le rayonnement ionisant ;
- un dispositif de mesure comprenant un unique photodétecteur, ledit photodétecteur étant un photodétecteur à faible bruit, le dispositif de détermination étant configuré de telle sorte que le photodétecteur fonctionne en régime de comptage de photon unique, le photodétecteur fournissant, à sa sortie, une mesure de l'intensité totale de lumière reçue par le photodétecteur à partir du scintillateur ; et
- un analyseur configuré pour déterminer une dose déposée dans le scintillateur par le rayonnement ionisant uniquement à partir de l'intensité totale de lumière mesurée par le photodétecteur et d'une constante prédéterminée dépendant uniquement du scintillateur, du rendement lumineux du dispositif de détermination et du type du rayonnement ionisant.

Le dispositif peut comprendre l'une ou plusieurs des caractéristiques suivantes, prises isolément ou suivant toute combinaison techniquement possible :

- l'analyseur est configuré pour déterminer :

  - la dose d'ionisation déposée dans le scintillateur par le rayonnement ionisant par application de la formule suivante: $D_{ion}(E) = \alpha_1 \times I_{totale}(E)$, où E est l'énergie du rayonnement ionisant incident, $I_{totale}(E)$ est l'intensité totale de lumière mesurée par le photodétecteur et $\alpha_1$ est une constante prédéterminée dépendant uniquement du scintillateur, du rendement lumineux du dispositif de détermination et du type du rayonnement ionisant ; et/ou

  - la dose d'excitation déposée dans le scintillateur par application de la formule suivante: $D_{exc}(E) = \alpha_2 \times I_{totale}(E)$, où E est l'énergie du rayonnement incident, $I_{totale}(E)$ est l'intensité totale de lumière mesurée par le photodétecteur et $\alpha_2$ est une constante prédéterminée dépendant uniquement du scintillateur, du rendement lumineux du dispositif de détermination et du type du rayonnement ionisant ; et/ou

  - la dose totale déposée dans le scintillateur par application de la formule suivante : $D_{totale}(E) = \alpha_3 \times I_{totale}(E)$, où E est l'énergie du rayonnement incident, $I_{totale}(E)$ est l'intensité totale de lumière mesurée par le photodétecteur et $\alpha_3$ est une constante prédéterminée dépendant uniquement du scintillateur, du rendement lumineux du dispositif de détermination et du type du rayonnement ionisant ;

- la constante $\alpha_1$ correspond à la pente d'une droite d'étalonnage établie pour ledit dispositif de détermination et donnant la dose d'ionisation mesurée pour ledit scintillateur au moyen d'une chambre d'ionisation en fonction de l'intensité totale mesurée, pour le même scintillateur, à l'aide du dispositif de détermination ;

- la constante $\alpha_2$ prédéterminée est calculée par application de la formule suivante :

$$\alpha_2 = \left( \frac{1}{\rho V Q a} - \alpha_1 \right)$$

, où $\rho$ est la masse volumique du scintillateur, exprimée en kg/m$^3$, V est le volume irradié du scintillateur, exprimé en m$^3$, Q est le rendement total de fluorescence exprimé en nombre total de photons de fluorescence émis par le scintillateur par unité d'énergie déposée, soit en J$^{-1}$ et $\alpha_1$ est une constante correspondant à la pente d'une droite d'étalonnage établie pour ledit dispositif de détermination et donnant la dose d'ionisation mesurée pour ledit scintillateur au moyen d'une chambre d'ionisation en fonction de l'intensité totale mesurée, pour le même scintillateur, à l'aide du dispositif de détermination ;

- la constante $\alpha_3$ prédéterminée est déterminée par application de la formule suivante : $\alpha_3 = (\alpha_1 + \alpha_2)$ où la constante $\alpha_2$ prédéterminée est calculée par application de la formule suivante:

$$\alpha_2 = \left( \frac{1}{\rho VQa} - \alpha_1 \right)$$, où $\rho$ est la masse volumique du scintillateur, exprimée en kg/m$^3$, V est le volume irradié du scintillateur, exprimé en m$^3$, Q est le rendement total de fluorescence exprimé en nombre total de photons de fluorescence émis par le scintillateur par unité d'énergie déposée, soit en J$^{-1}$ et $\alpha_1$ est une constante correspondant à la pente d'une droite d'étalonnage établie pour ledit dispositif de détermination et donnant la dose d'ionisation mesurée pour ledit scintillateur au moyen d'une chambre d'ionisation en fonction de l'intensité totale mesurée, pour le même scintillateur, à l'aide du dispositif de détermination ;

- le dispositif de détermination comprend en outre un atténuateur destiné à atténuer le rayonnement incident sur le photodétecteur de sorte à assurer le fonctionnement du photodétecteur en régime de comptage de photon unique ;

- l'atténuateur comprend :

    - un atténuateur amont, disposé en amont du scintillateur et configuré pour absorber une partie du rayonnement ionisant incident sur le scintillateur ; et/ou
    - un atténuateur aval, disposé en aval du scintillateur, entre le scintillateur et le photodétecteur et configuré pour absorber une partie du rayonnement émis par le scintillateur en direction du photodétecteur ;

- l'atténuateur comprend un élément réalisé dans un matériau propre à absorber le rayonnement ionisant incident, ledit élément étant disposé en amont du scintillateur sur le trajet du rayonnement incident sur le scintillateur ;

- l'atténuateur comprend un diaphragme disposé à l'entrée du photodétecteur, l'ouverture physique du diaphragme présentant une aire inférieure à celle de l'ouverture physique du photodétecteur ;

- le scintillateur est un scintillateur organique, de préférence réalisé en p-terphényle ou en anthracène ; et

- le dispositif de détermination comprend en outre un organe de transmission, configuré pour transmettre les photons de scintillation émis par le scintillateur jusqu'au photodétecteur, ledit organe de transmission comprenant de préférence une fibre optique reliant le scintillateur au photodétecteur.

L'invention concerne également un procédé de détermination d'une dose déposée dans un scintillateur par un rayonnement ionisant au moyen d'un dispositif de détermination tel que défini ci-dessus, comprenant :

- la mesure, au moyen d'un unique photodétecteur fonctionnant en régime de comptage de photon unique et à faible bruit, de l'intensité totale de lumière reçue par le photodétecteur ;

- la détermination, au moyen d'un analyseur, d'une dose déposée dans le scintillateur par le rayonnement ionisant uniquement à partir de l'intensité totale de lumière mesurée par le photodétecteur unique et d'une constante prédéterminée dépendant uniquement du scintillateur, du rendement lumineux du dispositif de détermination et du type du rayonnement ionisant.

Selon une caractéristique particulière du procédé, l'étape de détermination comprend :

- la détermination de la dose d'ionisation déposée dans le scintillateur par le rayonnement ionisant par application de la formule suivante :

$$D_{ion}(E) = \alpha_1 \times I_{totale}(E)$$

où

    $\alpha_1$ est une constante prédéterminée dépendant uniquement du scintillateur, du rendement lumineux du dispositif de détermination et du type du rayonnement ionisant;
    $I_{totale}(E)$ est l'intensité totale de lumière mesurée par le photodétecteur ; et/ou

- la détermination de la dose d'excitation déposée dans le scintillateur par le rayonnement ionisant par application de la formule suivante :
$D_{exc}(E) = \alpha_2 \times I_{totale}(E)$, où $I_{totale}(E)$ est l'intensité totale mesurée par le photodétecteur et $\alpha_2$ est une constante prédéterminée dépendant uniquement du scintillateur, du rendement lumineux du dispositif de détermination et du type du rayonnement ionisant;
et/ou

- la détermination de la dose totale déposée dans le scintillateur par le rayonnement ionisant par application de la formule suivante :

$$D_{totale}(E) = \alpha_3 \times I_{totale}(E),$$

où

    $I_{totale}(E)$ est l'intensité totale de lumière mesurée par le photodétecteur ; et
    $\alpha_3$ est une constante prédéterminée dépendant uniquement du scintillateur, du rendement lumineux du dispositif de détermination et du type du rayonnement ionisant.

L'invention sera mieux comprise à la lecture de la description qui va suivre, donnée uniquement à titre d'exemple, et faite en se référant aux dessins annexés, sur lesquels :

- la figure 1 est une représentation schématique d'un dispositif de détermination de la dose déposée dans un scintillateur ;
- la figure 2 est un schéma bloc illustrant les entrées et sorties d'un analyseur du dispositif de la figure 1 ; et
- les figures 3 et 4 sont des graphiques représentant les droites d'étalonnage obtenues en laboratoire respectivement pour l'anthracène et pour le paraterphényle.

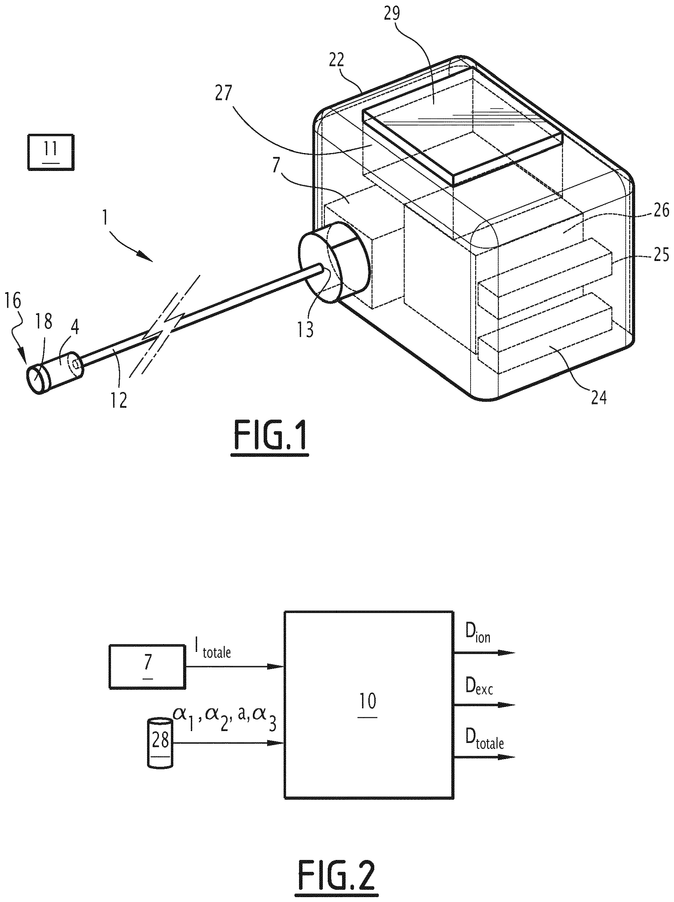

La figure 1 illustre schématiquement un exemple de dispositif 1 de détermination de la dose déposée dans un scintillateur 4 par un rayonnement ionisant selon l'invention.

Le dispositif de détermination 1 comprend :

- un scintillateur 4 configuré pour être irradié par un rayonnement ionisant et propre à émettre des photons de scintillation lors de l'interaction avec le rayonnement ionisant ;
- un dispositif de mesure comprenant un unique photodétecteur 7 ; et
- un analyseur 10 configuré pour déterminer la dose déposée dans le scintillateur 4 par le rayonnement ionisant à partir des mesures réalisées par le photodétecteur unique 7.

Le rayonnement ionisant est un rayonnement particulaire ou un rayonnement électromagnétique (photons), tel qu'un rayonnement X ou un rayonnement gamma. Dans le cas d'un rayonnement particulaire, les particules sont des particules chargées, en particulier des électrons, des protons, des particules alpha ou des ions, ou des particules non chargées, notamment des neutrons, par exemple des neutrons produisant des particules chargées dans le scintillateur par exemple par réaction nucléaire (n,p). Les électrons secondaires, issus des interactions primaires ionisantes des rayonnements cités plus haut avec le scintillateur 4, sont également détectés.

Les rayonnements X, gamma, électrons, protons, particules alpha, ions, neutrons, électrons secondaires correspondent à des types de rayonnements différents au sens de la présente demande de brevet.

Le rayonnement est un rayonnement discontinu, par exemple pulsé, ou un rayonnement continu.

La source 11 est toute source adaptée pour émettre un rayonnement ionisant tel que défini ci-dessus. La source 11 est par exemple un accélérateur de particules, un radionucléide artificiel ou naturel, un composant d'une installation nucléaire, tel qu'un réacteur nucléaire, un déchet nucléaire, un matériau fissile destiné à une application civile ou militaire, un générateur de rayons X médical, notamment un appareil d'imagerie ou de thérapie, ou un générateur de rayons X de recherche, tel qu'un synchrotron. Dans le mode de réalisation représenté, la source 11 est configurée pour émettre un faisceau de rayonnement ionisant directionnel ou collimaté. En variante, la source 11 est propre à émettre un rayonnement ionisant à 4 pi stéradian, isotrope ou non.

Le scintillateur 4 est un scintillateur organique ou inorganique. Par exemple, le scintillateur 4 est constitué d'anthracène ou de paraterphényle, ou est réalisé dans un matériau organique comprenant du p-terphényle ou de l'anthracène, ou dans un matériau inorganique, comme l'iodure de sodium dopé au thallium (NaI(Tl)), le germanate de bismuth (BGO), l'oxyorthosilicate de lutécium (LSO), l'oxyorthosilicate de lutécium et d'yttrium (LYSO).

Le scintillateur 4 est choisi de manière à émettre de la lumière de longueur d'onde comprise dans le domaine de longueurs d'onde auxquelles le photodétecteur 7 est sensible. Le scintillateur 4 émet par exemple dans l'ultraviolet.

Dans l'exemple représenté sur la figure 1, le scintillateur 4 est réalisé sous la forme d'une fibre optique scintillante. Cependant, le scintillateur 4 peut présenter toute autre forme adaptée, par exemple une forme de feuille ou une forme cylindrique ou parallélépipédique, en fonction de l'application à laquelle est destiné le dispositif de détermination 1. Le scintillateur 4 peut également être en phase liquide à température ambiante, comme du benzène ou du xylène ou dilué dans un solvant non scintillant, par exemple, le p-terphényle dilué dans un alcane ou un alcool.

En option, le dispositif de détermination 1 comprend en outre un organe de transmission 12 de la lumière issue du scintillateur 4 jusqu'au photodétecteur 7. Dans l'exemple représenté sur la figure 1, l'organe de transmission 12 comprend une fibre optique transparente reliant le scintillateur 4 au photodétecteur 7.

Le dispositif de détermination 1 est configuré de telle sorte que le photodétecteur 7 reçoive uniquement les photons de scintillation émis par le scintillateur 4.

A cet effet, le scintillateur 4 est par exemple disposé dans une enceinte étanche à la lumière, c'est-à-dire qu'elle empêche la lumière provenant de l'extérieur de l'enceinte d'entrer dans l'enceinte et qu'elle empêche également la lumière produite dans l'enceinte de sortir de l'enceinte. Le photodétecteur 7 est agencé de sorte à recevoir au moins une partie des photons de scintillation émis par le scintillateur 4 dans l'enceinte.

Dans le mode de réalisation dans lequel une fibre optique transparente relie le scintillateur 4 au photodétecteur 7, ladite fibre optique est de préférence revêtue d'une gaine étanche à la lumière. Ladite gaine est par exemple rapportée sur la fibre optique. Il s'agit par exemple d'une gaine thermorétractable. En variante, la gaine est constituée par un revêtement formé sur la fibre optique par exemple par évaporation.

Dans le mode de réalisation représenté sur la figure 1 où le scintillateur 4 se présente sous la forme d'une fibre optique scintillante fixée au bout d'une fibre optique transparente, la gaine étanche à la lumière recouvre avantageusement également le scintillateur 4.

En alternative, un filtre passe-bande configuré pour ne laisser passer que la longueur d'onde d'émission du scintillateur 4 est disposé à l'entrée du photodétecteur 7. A titre d'exemple, le filtre est un filtre interférométrique. Dans ce cas, le photodétecteur 7 reçoit uniquement les photons de scintillation provenant du scintillateur 4 même si à la fois le scintillateur 4 et le photodétecteur 7 sont disposés à la lumière.

Le dispositif de détermination 1 comprend une unité centrale 27 de traitement adaptée pour exécuter des applications nécessaires au fonctionnement du dispositif de détermination 1.

L'unité centrale 27 de traitement comprend à cette fin un processeur et une ou plusieurs mémoires.

Le processeur est adapté pour exécuter des applications contenues dans la mémoire, notamment un système d'exploitation permettant le fonctionnement classique d'un système informatique.

La mémoire comprend différentes zones de mémoire contenant notamment l'analyseur 10, sous la forme d'un programme informatique destiné à être mis en œuvre par le processeur, et une mémoire de données 28 contenant des paramètres caractéristiques du dispositif de détermination 1 qui seront décrits plus en détail dans la suite de la description.

Dans l'exemple représenté sur la figure 1, le photodétecteur 7, ainsi que l'unité de traitement 27 sont intégrés dans un boîtier de protection 22. Ce boîtier de protection 22 présente, à titre d'exemple, un côté de longueur de l'ordre de 15 cm.

En option, le dispositif de détermination 1 comprend également des moyens de communication avec un réseau numérique, par exemple via un port USB 24, ou par l'intermédiaire de moyens de communication sans fil 25 ou d'un port Ethernet intégrés au boîtier de protection 22.

Dans l'exemple représenté, le dispositif de détermination 1 comprend des moyens d'alimentation en énergie de l'unité de traitement 27, du photodétecteur 7 et des éventuels moyens de communication. A titre d'exemple, ces moyens d'alimentation en énergie comprennent un port USB 24, intégré au boîtier de protection 22. L'ensemble est destiné à être relié à une source d'alimentation électrique, par exemple à un ordinateur par l'intermédiaire d'une connexion USB ou par l'intermédiaire d'un boitier transformateur de tension connecté au port USB 24.

En variante, l'unité de traitement 27, le photodétecteur 7 et les éventuels moyens de communication 25 sont alimentés en énergie par l'intermédiaire d'une batterie 26 intégrée au boîtier de protection 22. Le dispositif fonctionne alors de façon autonome.

Dans le mode de réalisation représenté, le dispositif de détermination 1 comprend en outre un écran 29 propre à afficher des informations provenant de l'unité de traitement 27.

Le photodétecteur 7 est configuré pour recevoir au moins une partie de la lumière émise par le scintillateur 4 sous l'effet de l'irradiation par le rayonnement ionisant et pour mesurer l'intensité de lumière reçue.

Selon l'invention, le dispositif de détermination 1 est configuré de telle sorte que le photodétecteur 7 fonctionne en régime de comptage de photon unique. Par régime de comptage de photon unique, on entend que le photodétecteur 7 ne reçoit qu'un seul photon à la fois. En d'autres termes, l'exposition du photodétecteur 7 à la lumière émise par le scintillateur 4 est telle que la probabilité que le photodétecteur 7 reçoive deux photons de scintillation en même temps soit inférieure ou égale à 0,01 (1%).

A cet effet, le dispositif de mesure comprend de préférence un atténuateur destiné à atténuer le rayonnement incident sur le photodétecteur 7 de sorte à assurer le fonctionnement du photodétecteur 7 en comptage de photon unique.

L'atténuateur comprend :

- un atténuateur aval 13 disposé en aval du scintillateur 4, entre le scintillateur 4 et le photodétecteur 7, et configuré pour absorber une partie du rayonnement issu du scintillateur 4 ; et/ou
- un atténuateur amont 16 disposé en amont du scintillateur 4 et configuré pour absorber une partie du rayonnement incident sur le scintillateur 4.

L'atténuateur aval 13 est formé par tout moyen propre à atténuer suffisamment la lumière issue du scintillateur 4 incidente sur le photodétecteur 7.

A titre d'exemple, l'atténuateur aval 13 est un diaphragme disposé à l'entrée du photodétecteur 7 sur le trajet du rayonnement émis par le scintillateur 4. Le diaphragme est configuré pour limiter l'ouverture d'entrée du photodétecteur 7 de telle sorte que le photodétecteur 7 ne reçoive que les photons passant à travers le diaphragme. Ainsi, l'ouverture physique du diaphragme est strictement inférieure à l'ouverture physique du photodétecteur 7. Ce diaphragme est, selon un exemple, formé par une simple fente disposée à l'entrée du photodétecteur 7 de sorte à limiter son ouverture d'entrée. Une telle fente présente par exemple un contour circulaire. En variante, elle peut présenter un contour carré, rectangulaire ou tout contour adapté. Selon un mode de réalisation, le diaphragme présente une ouverture réglable, éventuellement commandée électriquement.

En variante, l'atténuateur aval 13 est un écran réalisé dans un matériau semi transparent adapté à la longueur d'onde de la lumière de scintillation. En variante, il peut se présenter sous la forme d'un empilement d'écrans semi transparents.

En variante, l'atténuateur aval 13 est un dispositif interférométrique formé de deux lames quart d'onde adaptées à la longueur d'onde de la lumière de scintillation. Ce dispositif interférométrique est commandé manuellement ou électriquement.

En variante, l'atténuateur aval 13 est un écran à cristaux liquides dont l'opacification, résultant d'un changement d'orientation des cristaux sous l'effet d'un champ électrique, est commandée électriquement.

En variante, l'atténuateur aval 13 est formé un pli adapté formé dans la fibre optique de transmission 12 du rayonnement entre le scintillateur 4 et le photodétecteur 7.

D'une manière générale, l'atténuateur aval 13 peut être formé par tout autre dispositif propre à atténuer le rayonnement émis par le scintillateur 4.

L'atténuateur amont 16 est interposé sur le trajet du rayonnement incident vers le scintillateur 4, entre le scintillateur 4 et la source de rayonnement 11.

Dans l'exemple illustré sur la figure 1, l'atténuateur amont 16 comprend une plaque d'atténuation 18 réalisée dans un matériau propre à absorber une proportion constante du rayonnement incident.

Le matériau de la plaque d'atténuation 18 est choisi en fonction de la nature du rayonnement ionisant.

A titre d'exemple, lorsque le rayonnement incident est un rayonnement gamma ou un rayonnement X, la plaque d'atténuation 18 est notamment réalisée en plomb ou en aluminium.

En variante, lorsque le rayonnement incident est un rayonnement proton ou alpha, il peut s'agir d'un dépôt métallique, par exemple de l'or, d'épaisseur adaptée en fonction des propriétés d'atténuation du matériau, réalisé sur le scintillateur 4.

En variante, lorsque le rayonnement incident est un rayonnement électron, la plaque d'atténuation 18 est constituée par exemple par une feuille réalisé en matière plastique ou dans un matériau métallique d'épaisseur adaptée.

Dans l'exemple représenté sur la figure 1, la plaque d'atténuation 18 est fixée sur le scintillateur 4 de telle sorte à se trouver sur le trajet du rayonnement ionisant.

En alternative à la plaque d'atténuation 18, l'atténuateur amont 16 est constitué par un élément d'atténuation entourant le scintillateur 4 sur une partie au moins de sa longueur et réalisé dans un matériau propre à absorber une proportion constante du rayonnement incident. A titre d'exemple, un tel élément se présente sous la forme d'une bague, d'un revêtement ou d'une feuille entourant le scintillateur 4. Ces éléments peuvent être réalisés dans les matériaux décrits ci-dessus pour la plaque d'atténuation 18.

En variante, l'atténuateur amont 16 est formé par tout autre dispositif propre à atténuer le rayonnement ionisant en amont du scintillateur 4.

L'atténuation nécessaire pour que le photodétecteur 7 fonctionne en régime de comptage de photon unique dépend du type du rayonnement ionisant, de la nature et des dimensions du scintillateur 4 et de la sensibilité du photodétecteur 7.

Dans le dispositif de détermination 1 selon l'invention, l'atténuateur est choisi en fonction du type du rayonnement ionisant, de la sensibilité du photodétecteur 7 et de la nature et des dimensions du scintillateur 4 de telle sorte que le photodétecteur 7 fonctionne en régime de comptage de photon unique.

En particulier, selon le type du rayonnement ionisant, la nature et les dimensions du scintillateur 4 et la sensibilité du photodétecteur 7, la mise en œuvre d'un atténuateur amont 16 uniquement ou d'un atténuateur aval 13 uniquement peut être suffisante pour obtenir le régime de comptage unique au niveau du photodétecteur 7.

Dans le cas où le dispositif de détermination 1 comprend un atténuateur aval 13 et/ou un atténuateur amont 16 tels que décrits précédemment, le choix de l'atténuateur comprend le réglage du niveau d'atténuation par l'atténuateur aval 13, et notamment le choix des dimensions de l'ouverture du diaphragme de l'atténuateur aval 13 et/ou le réglage du niveau d'atténuation par l'atténuateur amont 16, et notamment le choix de l'épaisseur du matériau d'atténuation 18, afin d'obtenir un fonctionnement du photodétecteur 7 en régime de comptage de photon unique.

L'homme du métier est en mesure de choisir l'atténuateur par un nombre limité d'expériences en fonction du type du rayonnement ionisant, de la nature et des dimensions du scintillateur 4 et de la sensibilité du photodétecteur 7. En particulier, il est en mesure de déterminer si un atténuateur aval 13 seul ou un atténuateur amont 16 seul suffit ou s'il convient d'utiliser un atténuateur aval 13 et un atténuateur amont 16, ainsi que les dimensions nécessaires pour ces dispositifs d'atténuation aval 13 et/ou amont 16 de sorte que le photodétecteur 7 fonctionne en régime de comptage de photon unique.

A titre d'exemple, pour une fente d'atténuation aval de dimensions données, l'homme du métier pourra faire varier l'épaisseur de la plaque d'atténuation 18 jusqu'à obtenir un régime de comptage de photon unique. En alternative, pour une plaque d'atténuation 18 d'épaisseur donnée, l'homme du métier pourra faire varier les dimensions de la fente d'atténuation jusqu'à obtenir un régime de comptage de photon unique.

A titre d'exemple, pour une irradiation par des rayons X présentant une énergie comprise entre 80 kV et 140 kV, avec un scintillateur 4 à base de p-terphényle de volume environ égal à 150 $mm^3$ et de poids égal à 76,2 mg, on pourra utiliser en combinaison une fente circulaire de surface environ égale à 0,5 $mm^2$ en tant qu'atténuateur aval 13 et une plaque constituée de plomb présentant une épaisseur de 0,5 mm en tant qu'atténuateur amont 16.

Une méthode permettant de vérifier si le photodétecteur 7 fonctionne en régime de comptage de photon unique consiste à relier la sortie du photodétecteur 7 à un oscilloscope et à observer l'amplitude des impulsions en sortie du photodétecteur 7. Le photodétecteur 7 fonctionne en régime de comptage de photon unique si l'amplitude de ces impulsions est sensiblement constante et correspond à la réception d'un seul photon. En effet, l'amplitude des impulsions est proportionnelle au nombre de photons détectés simultanément.

Dans certains cas, et en particulier pour des rayonnements faiblement ionisants, le photodétecteur 7 fonctionne en régime de comptage de photon unique en l'absence de toute atténuation. Dans ce cas, le dispositif de détermination 1 peut ne pas comprendre d'atténuateur.

A titre d'exemple, dans le cas d'un scintillateur 4 à base d'anthracène ou de p-terphényle, pour un rayonnement constitué de photons gamma issus d'une source étalon de césium 137 (662 keV), dont l'activité totale est de 400 kBq, placée à 10 cm du scintillateur 4, aucun atténuateur n'est nécessaire pour obtenir le régime de comptage de photon unique.

Le photodétecteur 7 est par exemple formé par un tube photomultiplicateur. En variante, il s'agit d'un photomultiplicateur à galettes de microcanaux ou d'un détecteur à semiconducteur.

Le photodétecteur 7 est un photodétecteur à faible bruit, et en particulier un photodétecteur dont le bruit de comptage est inférieur ou égal à 1% du signal total compté. A titre d'exemple, le photodétecteur 7 est un photodétecteur à bas bruit Hamamatsu de type Multi-Pixel Photon Counter (MPPC) à bas bruit.

Le photodétecteur 7 fournit, à sa sortie, une mesure de l'intensité totale $I_{totale}(E)$ de lumière reçue du scintillateur 4, correspondant au nombre total de photons de luminescence compté pendant la durée de la mesure, sous un rayonnement incident d'énergie E.

L'unité de traitement 27 est reliée en entrée à la sortie du photodétecteur 7. L'analyseur 10 reçoit et compte les impulsions électriques issues du photodétecteur 7. La somme des impulsions électriques comptées par l'analyseur 10 correspond à la somme des photons uniques détectés par le photodétecteur 7 pendant la durée de la mesure. Cette somme est aussi l'intensité totale $I_{totale}(E)$ de luminescence mesurée par le photodétecteur 7.

La durée de la mesure est variable en fonction de la nature et de l'intensité du rayonnement reçu par le scintillateur 4, de la nature du scintillateur 4 et des paramètres de configuration et de réglage des dispositifs d'atténuation amont 16 et/ou aval 13, des caractéristiques du photodétecteur 7 et de la rapidité de comptage de l'analyseur 10.

A titre d'exemple, elle est comprise entre 0,1 seconde et 1 seconde pour les rayons X médicaux entre 60 et 120keV, pour un analyseur fonctionnant en résolution nanoseconde. La durée de la mesure dépend du choix des atténuateurs amont 16 et/ou aval 13. Pour une atténuation fixée, l'homme du métier règle la durée de la mesure de manière à ce que l'incertitude relative sur la valeur obtenue soit inférieure ou égale à 1%.

La grandeur $I_{totale}(E)$, mesurée par le photodétecteur 7 est le produit de l'intensité de lumière émise par le scintillateur 4, $I(E)$, par le rendement lumineux a du dispositif de détermination, soit, $I_{totale}(E) = a \times I(E)$.

Le rendement lumineux a, compris en 0 et 1, sans dimension, prend en compte les effets constants liés à la géométrie du dispositif de détermination 1, et notamment à la géométrie des dispositifs d'atténuation amont 16 et/ou aval 13, ainsi que le rendement lumineux constant du photodétecteur 7 lors de la mesure. L'homme du métier est capable de déterminer la valeur du rendement lumineux a, pour une configuration géométrique donnée et pour un photodétecteur donné 7 par un nombre limité d'essais.

L'unité de traitement 27 comprend une mémoire de données 28 contenant des paramètres prédéterminés dépendant uniquement du scintillateur 4 et du rendement lumineux du dispositif de détermination 1. Ces paramètres comprennent un facteur de proportionnalité prédéterminé $\alpha_1$ dépendant uniquement du scintillateur 4, du rendement lumineux a du dispositif de détermination 1 et du type du rayonnement ionisant.

Le facteur de proportionnalité $\alpha_1$ correspond au rapport, pour un matériau scintillant donné, entre une dose d'ionisation $D_{ion}(E)$ et l'intensité de lumière $I_{totale}(E)$ :

$$\alpha_1 = \frac{D_{ion}(E)}{I_{totale}(E)}.$$

La dose d'ionisation $D_{ion}(E)$ est la dose résultant de l'ionisation des molécules scintillantes du scintillateur 4 par le rayonnement ionisant.

Le facteur de proportionnalité $\alpha_1$ est une constante dépendant uniquement du scintillateur 4 utilisé, du rendement lumineux a du dispositif de détermination 1 et du type du rayonnement ionisant.

A titre d'exemple, une méthode de mesure du facteur de proportionnalité $\alpha_1$ pour un scintillateur 4 donné consiste à déterminer une droite d'étalonnage $D_{ion}(E) = \alpha_1 \times I_{totale}(E)$ en déterminant les couples $I_{totale}(E)$ et $D_{ion}(E)$ pour un rayonnement de type donné à différentes énergies E. A cet effet, on détermine la dose déposée dans un scintillateur 4 pendant une durée d'irradiation d par un rayonnement ionisant d'énergie E fixée au moyen d'une chambre d'ionisation étalonnée. La dose ainsi obtenue correspond à la dose d'ionisation $D_{ion}(E)$ déposée dans le scintillateur 4 par le rayonnement ionisant pendant la durée d. Pour le même type de rayonnement, la même énergie E, le même scintillateur 4 et la même durée d, on mesure, au moyen du dispositif de détermination 1 selon l'invention, l'intensité totale $I_{totale}(E)$ de lumière émise par le scintillateur 4 et reçue par le photodétecteur 7.

On répète ensuite ces opérations à différentes énergies E, toutes choses étant égales par ailleurs, ce qui permet de trouver les couples $D_{ion}(E)$, $I_{totale}(E)$ associés à chacune de ces énergies, et de tracer la droite d'étalonnage mentionnée ci-dessus. Le facteur de proportionnalité $\alpha_1$ pour le rayonnement de type considéré correspond à la pente de cette droite.

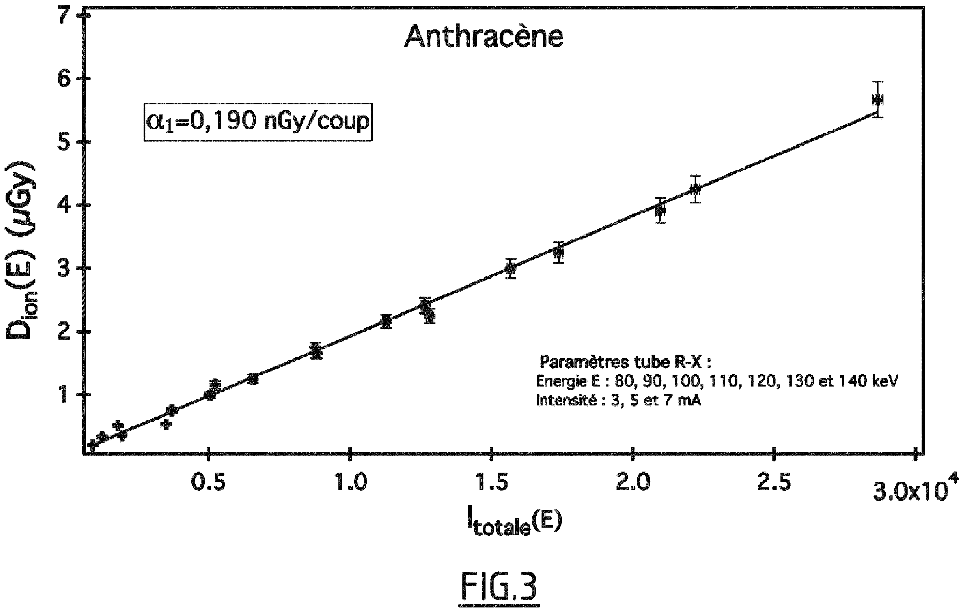

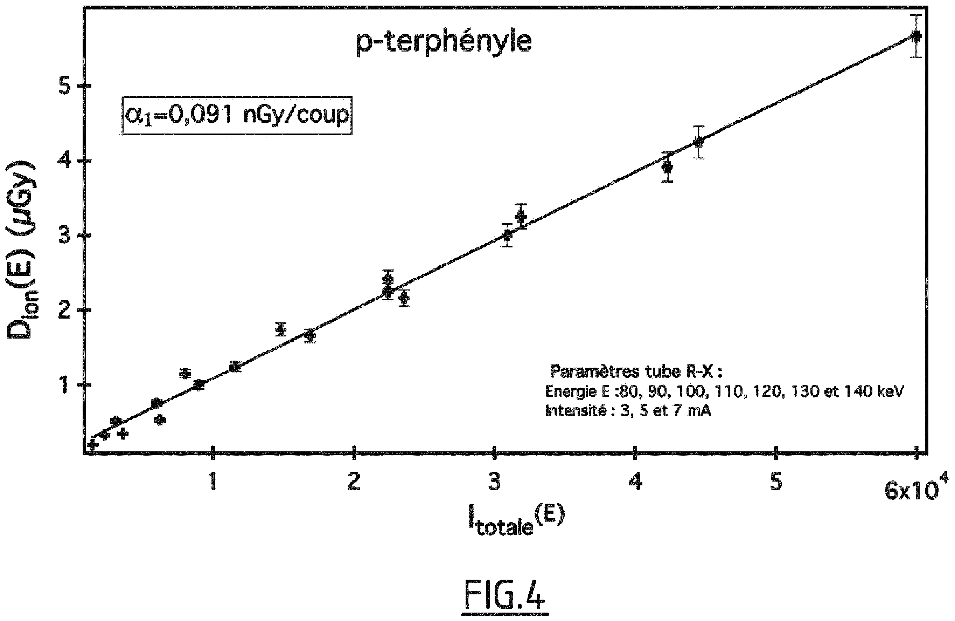

Les inventeurs ont réalisé ces expériences en laboratoire pour l'anthracène et le p-terphényle en tant que molécules scintillantes modèles. Les droites d'étalonnage obtenues sont représentées respectivement dans les Figures 3 et 4. Ils ont trouvé que $\alpha_1$ vaut 0,190 nGy/coup pour un scintillateur 4 donné réalisé en anthracène dans le cas d'un rayonnement X et 0,091 nGy/coup pour un scintillateur 4 donné en p-terphényle dans le cas d'un rayonnement X.

Le facteur de proportionnalité $\alpha_1$ est ainsi prédéterminé pour un scintillateur 4, un rendement lumineux a et un type de rayonnement donnés. Il est ensuite placé dans la mémoire de données 28 en tant que paramètre prédéterminé. En variante, le dispositif de détermination peut comprendre des moyens de saisie de ce facteur $\alpha_1$ par un utilisateur, par exemple à partir d'une table prédéterminée, le facteur étant ensuite fourni en entrée à l'analyseur 10.

Selon l'invention, l'analyseur 10 est configuré pour déterminer une dose déposée dans le scintillateur 4 par le rayonnement ionisant en fonction uniquement de l'intensité de lumière $I_{totale}(E)$ mesurée par le photodétecteur 7 fonctionnant en régime de comptage de photon unique et d'une constante dépendant uniquement du scintillateur 4 utilisé, du rendement lumineux a du dispositif de détermination 1 et du type du rayonnement ionisant.

En particulier, l'analyseur 10 est configuré pour déterminer la dose d'ionisation $D_{ion}(E)$ déposée dans le scintillateur 4 par le rayonnement ionisant en fonction de l'intensité de lumière $I_{totale}(E)$ mesurée par le photodétecteur 7 et du facteur de proportionnalité prédéterminé $\alpha_1$.

Plus particulièrement, l'analyseur 10 est configuré pour déterminer la dose d'ionisation $D_{ion}(E)$ déposée dans le scintillateur 4 par le rayonnement ionisant considéré par application de la formule suivante :

$$D_{ion}(E) = \alpha_1 \times I_{totale}(E),$$

où

$\alpha_1$ est le facteur de proportionnalité précité, stocké dans la mémoire de données 28 ;
$I_{totale}(E)$ est l'intensité totale de lumière mesurée par le photodétecteur 7 ;
E est l'énergie du rayonnement ionisant incident.

La dose d'ionisation $D_{ion}(E)$ est la dose actuellement prise en compte dans les normes relatives à la radioprotection, et en particulier la norme Euratom 2013/59, qui précise les limites acceptables en termes de dose d'irradiation. Il s'agit de la dose mesurée par les chambres d'ionisation habituellement utilisées dans le domaine de la dosimétrie.

En variante ou en option, l'analyseur 10 est configuré pour déterminer la dose d'excitation $D_{exc}(E)$ déposée dans le scintillateur 4 par le rayonnement ionisant en fonction de l'intensité totale $I_{totale}(E)$ mesurée par le photodétecteur 7 et d'un paramètre prédéterminé $\alpha_2$ dépendant uniquement du scintillateur 4, du rendement lumineux a du dispositif de détermination 1 et du type du rayonnement ionisant.

Plus particulièrement, l'analyseur 10 est configuré pour déterminer la dose d'excitation $D_{exc}(E)$ par application de la formule suivante : $D_{exc}(E) = \alpha_2 \times I_{totale}(E)$.

Dans cette formule, $\alpha_2$ est une constante prédéterminée uniquement du scintillateur 4, du rendement lumineux a du dispositif de détermination 1 et du type du rayonnement ionisant. Elle est notamment obtenue par calcul par application de la formule suivante:

$$\alpha_2 = \left(\frac{1}{\rho V Q a} - \alpha_1\right),$$ où $\rho$ est la masse volumique du scintillateur 4, exprimée en kg/m$^3$, V est le volume irradié du scintillateur 4, exprimé en m$^3$ et Q est le rendement total de fluorescence exprimé en nombre total de photons de fluorescence émis par le scintillateur 4 par unité d'énergie déposée, soit en J$^{-1}$. Le rendement total de fluorescence Q est une grandeur propre au scintillateur 4, connue de la littérature. Le volume irradié V dépend du type du rayonnement et peut être déterminé par l'homme du métier sans difficultés particulières en fonction de la profondeur de pénétration du rayonnement considéré.

La constante $\alpha_2$ est prédéterminée pour un dispositif de détermination 1 donné en fonction du type du rayonnement ionisant utilisé. Elle est stockée dans la mémoire de données 28 de l'unité de traitement 27 en tant que paramètre prédéterminé. A titre d'exemple, la mémoire de données 28 comprend une table de constantes $\alpha_2$ pour différents types de rayonnements ionisants susceptibles d'être utilisés, par exemple rayonnement X, rayonnement gamma, rayonnement alpha, proton, neutrons, ions, etc.

A titre d'illustration, pour un échantillon d'anthracène de masse M=$\rho$V=2,8.10$^{-6}$kg, avec $\alpha_1$=0,193nGy/coup, Q=1,25.10$^{17}$photons/J et a=10$^{-2}$, on obtient: 1/pVQa=0,286nGy/coup, $\alpha_2$=0,091 nGy/coup.

En alternative ou en option, l'analyseur 10 est configuré pour déterminer la dose totale $D_{totale}(E)$ déposée dans le scintillateur 4 par le rayonnement ionisant en fonction de l'intensité totale $I_{totale}(E)$ de lumière mesurée par le photodétecteur 7 et d'une constante prédéterminée $\alpha_3$ dépendant uniquement du scintillateur 4, du rendement lumineux a du dispositif de détermination 1 et du type du rayonnement ionisant.

La dose totale $D_{totale}(E)$ correspond à la somme de la dose d'ionisation $D_{ion}(E)$ et de la dose d'excitation $D_{exc}(E)$, la dose d'ionisation $D_{ion}(E)$ résultant de l'ionisation des molécules scintillantes du scintillateur 4 par le rayonnement ionisant, tandis que la dose d'excitation $D_{exc}(E)$ résulte de l'excitation non ionisante des molécules scintillantes du scintillateur 4 par le rayonnement ionisant.

En particulier, l'analyseur 10 est configuré pour déterminer la dose totale $D_{totale}(E)$ par application de la formule suivante : $D_{totale}(E) = \alpha_3 \times I_{totale}(E)$, où

E est l'énergie du rayonnement incident,

$I_{totale}(E)$ est l'intensité totale de lumière mesurée par le photodétecteur (7) ; et

$\alpha_3$ est une constante prédéterminée dépendant uniquement du scintillateur 4, du rendement lumineux a du dispositif de détermination 1 et du type du rayonnement ionisant.

Plus particulièrement, $\alpha_3 = \alpha_1 + \alpha_2$, où $\alpha_1$ et $\alpha_2$ sont les constantes prédéterminées définies précédemment.

La constante $\alpha_3$ est prédéterminée pour un dispositif de détermination 1 donné en fonction du type du rayonnement ionisant utilisé. Elle est stockée dans la mémoire de données 28 de l'unité de traitement 27 en tant que paramètre prédéterminé. A titre d'exemple, la mémoire de données 28 comprend une table de constantes $\alpha_3$ pour différents types de rayonnements ionisants susceptibles d'être utilisés, par exemple rayonnement X, rayonnement gamma, rayonnement alpha, proton, neutrons, ions, etc.

Ainsi, le dispositif de détermination 1 selon ces options ou variantes présente l'avantage de permettre la détermination, de manière extrêmement simple, de la dose d'ionisation $D_{ion}(E)$, de la dose d'excitation $D_{exc}(E)$ et/ou de la dose totale $D_{totale}(E)$ déposée dans le scintillateur 4.

La dose d'excitation $D_{exc}(E)$ et la dose totale $D_{totale}(E)$, cette dernière incluant la dose d'excitation, ne sont pas actuellement prises en compte par les normes relatives à la radioprotection. Or, la connaissance de la dose d'excitation $D_{exc}(E)$ et de la dose totale $D_{totale}(E)$ résulte en une image plus complète de la dose déposée dans le scintillateur 4 que la simple connaissance de la dose d'ionisation $D_{ion}(E)$.

A titre d'exemple, pour un scintillateur 4 réalisé en anthracène de masse M=pV=2,8.$10^{-6}$kg tel que mentionné précédemment, un faisceau de rayons X de 120keV, le photodétecteur 7 mesure $I_{totale}(E)$=2,2x$10^4$ coups.

A partir de $I_{totale}(E)$ et des paramètres a et $\alpha_1$ enregistrés dans la mémoire 28 de l'unité de traitement 27, l'analyseur 10 détermine alors que $D_{ion}(E)$=4,25$\mu$Gy, $D_{exc}(E)$=2,04$\mu$Gy et $D_{totale}(E)$=6,29$\mu$Gy.

Dans ce cas, on constate que le rapport $D_{exc}(E)/D_{ion}(E)$=0,48 alors que le rapport $I_{exc}(E)/I_{ion}(E)$=14,06. La dose d'ionisation représente donc dans ce cas 67,6% de la dose totale déposée. La dose d'excitation représente quant à elle 31,4% de la dose totale déposée, ce qui correspond à une contribution non négligeable à la dose totale reçue par le scintillateur 4.

Le dispositif de détermination 1 selon l'invention est particulièrement avantageux. En effet, il permet une détermination très précise de la dose reçue par le scintillateur 4, tout en étant peu coûteux et particulièrement sensible.

En effet, les inventeurs de la présente invention ont découvert, de manière surprenante, qu'il est possible de déterminer précisément la dose déposée dans le scintillateur 4 à partir des mesures réalisées par un seul photodétecteur 7 à condition que ce photodétecteur 7 fonctionne en régime de comptage de photon unique et soit de faible bruit, c'est-à-dire présente un bruit inférieur ou égal à 1% du signal total compté. En effet, les inventeurs ont constaté que, pour un photodétecteur 7 à faible bruit, le fonctionnement du photodétecteur 7 en régime de comptage de photon unique suffit à garantir, sur une large plage de doses déposées, une relation linéaire entre la dose totale $D_{totale}(E)$ déposée dans le scintillateur 4 et l'intensité totale de lumière de scintillation totale $I_{totale}(E)$ mesurée par le photodétecteur 7, ainsi qu'entre la dose d'ionisation $D_{ion}(E)$ ou la dose d'excitation $D_{exc}(E)$ et l'intensité totale de lumière de scintillation $I_{totale}(E)$ mesurée par le photodétecteur 7. De plus, les inventeurs ont constaté que, dans ce cas, les constantes de proportionnalité $\alpha_1$, $\alpha_2$, $\alpha_3$ respectives dépendent uniquement du scintillateur 4, du rendement lumineux a du dispositif de détermination 1 et du type du rayonnement ionisant, et peuvent être prédéterminées pour un dispositif de détermination 1 donné en fonction du type du rayonnement ionisant utilisé.

Ces constatations permettent de simplifier le dispositif de détermination par rapport à celui décrit par exemple dans la demande de brevet EP 2 771 716 antérieure qui nécessite deux photodétecteurs distincts pour la détermination précise de la dose d'ionisation $D_{ion}(E)$.

De plus, le dispositif de détermination 1 selon l'invention est plus sensible que celui décrit dans la demande de brevet antérieure EP 2 771 716, tout en présentant une précision de mesure analogue. En effet, dans le dispositif de détermination 1, une plus grande partie de la lumière issue du scintillateur 4 est exploitée par le photodétecteur 7 pour la détermination de la dose déposée dans le scintillateur 4 que dans le cadre du procédé décrit dans la demande de brevet EP 2 771 716 antérieure, dans lequel seule une petite fraction des photons de scintillation est utile, puisque seuls les évènements de coïncidence sont comptés.

En particulier, la sensibilité du dispositif de détermination 1 selon l'invention est inférieure ou égale au nanoGray.

En outre, avec le dispositif de détermination 1 selon l'invention, la détermination de la dose déposée ne nécessite pas de reconstitution temporelle, totale ou partielle, d'un déclin de fluorescence, ce qui résulte en une grande simplicité du dispositif de détermination 1, du point de vue de son électronique et de sa consommation d'énergie, mais également du point de vue de son encombrement et de sa portabilité.

Enfin, le dispositif de détermination 1 selon l'invention est très peu encombrant. A titre d'exemple, l'unité de traitement 27 et le photodétecteur 7 peuvent être logés dans un boîtier de protection 22 dont le côté ne dépasse pas 15 cm.

L'invention concerne également un procédé de détermination de la dose déposée dans un scintillateur 4 par un rayonnement ionisant, comprenant :

- la mesure, au moyen d'un unique photodétecteur 7 fonctionnant en régime de comptage de photon unique et à faible bruit, de l'intensité $I_{totale}(E)$ de lumière de scintillation reçue par le photodétecteur 7 ; et
- la détermination, au moyen d'un analyseur 10, d'une dose totale $D_{totale}(E)$, d'une dose d'excitation $D_{exc}(E)$ ou d'une dose d'ionisation $D_{ion}(E)$, déposée dans le scintillateur 4 par le rayonnement ionisant uniquement à partir de l'intensité de lumière $I_{totale}(E)$ mesurée par le photodétecteur 7 unique et d'une constante prédéterminée dépendant uniquement du scintillateur 4, du rendement lumineux a du dispositif de détermination 1 et du type du rayonnement ionisant.

Selon un mode de réalisation, l'étape de détermination comprend la détermination, au moyen de l'analyseur 10, de la dose d'ionisation $D_{ion}(E)$ déposée dans le scintillateur 4 par le rayonnement ionisant uniquement à partir de l'intensité de lumière $I_{totale}(E)$ mesurée par le photodétecteur 7 unique et d'une constante $\alpha_1$ prédéterminée dépendant uniquement du scintillateur 4, du rendement lumineux a du dispositif de détermination 1 et du type du rayonnement ionisant.

Plus particulièrement, ce procédé de détermination est mis en œuvre au moyen du dispositif de détermination 1 tel que décrit précédemment.

Au cours de l'étape de détermination, l'analyseur 10 détermine la dose d'ionisation $D_{ion}(E)$ déposée dans le scintillateur 4 par application de la formule suivante :

$$D_{ion}(E) = \alpha_1 \times I_{totale}(E)$$

où

$\alpha_1$ est la constante prédéterminée définie précédemment;

$I_{totale}(E)$ est l'intensité totale de lumière mesurée par le photodétecteur 7 ;

E est l'énergie du rayonnement d'ionisation incident.

En variante ou en option, l'étape de détermination comprend la détermination, au moyen d'un analyseur 10, de la dose d'excitation $D_{exc}(E)$ déposée dans le scintillateur 4 par le rayonnement ionisant uniquement à partir de l'intensité de lumière $I_{totale}(E)$ mesurée par le photodétecteur 7 unique et d'une constante $\alpha_2$ prédéterminée dépendant uniquement du scintillateur 4, du rendement lumineux a du dispositif de détermination 1 et du type du rayonnement ionisant.

Plus particulièrement, ce procédé de détermination est mis en œuvre au moyen du dispositif de détermination 1 tel que décrit précédemment.

Au cours de l'étape de détermination, l'analyseur 10 détermine la dose d'excitation $D_{exc}(E)$ par application de la formule suivante :

$D_{exc}(E) = \alpha_2 \times I_{totale}(E)$, où $I_{totale}(E)$ est l'intensité totale mesurée par le photodétecteur 7 et $\alpha_2$ est la constante prédéterminée décrite précédemment.

En variante ou en option, l'étape de détermination comprend la détermination, au moyen de l'analyseur 10, de la dose totale $D_{totale}(E)$ déposée dans le scintillateur 4 par le rayonnement ionisant uniquement à partir de l'intensité de lumière $I_{totale}(E)$ mesurée par le photodétecteur 7 unique et d'une constante $\alpha_3$ prédéterminée dépendant uniquement du scintillateur 4, du rendement lumineux a et du type du rayonnement ionisant.

Plus particulièrement, ce procédé de détermination est mis en œuvre au moyen du dispositif de détermination 1 tel que décrit précédemment.

Au cours de l'étape de détermination, l'analyseur 10 détermine la dose totale $D_{totale}$ par application de la formule suivante : $D_{totale}(E) = \alpha_3 \times I_{totale}(E)$, où $I_{totale}(E)$ est l'intensité totale mesurée par le photodétecteur 7 et $\alpha_3$ est la constante prédéterminée définie précédemment.

Ce procédé de détermination présente les avantages évoqués précédemment en regard du dispositif de détermination 1.

## Revendications

1. Dispositif de détermination (1) d'une dose déposée dans un scintillateur (4) par un rayonnement ionisant, comprenant :

- un scintillateur (4) configuré pour être irradié par le rayonnement ionisant et propre à émettre des photons de scintillation lors de l'interaction avec le rayonnement ionisant ;
- un dispositif de mesure comprenant un unique photodétecteur (7), ledit photodétecteur (7) étant un photodétecteur à faible bruit, le dispositif de détermination (1) étant configuré de telle sorte que le photodétecteur (7) fonctionne en régime de comptage de photon unique, le photodétecteur (7) fournissant, à sa sortie, une mesure de l'intensité totale ($I_{totale}(E)$) de lumière reçue par le photodétecteur (7) à partir du scintillateur (4) ; et
- un analyseur (10) configuré pour déterminer une dose déposée dans le scintillateur (4) par le rayonnement ionisant uniquement à partir de l'intensité totale ($I_{totale}(E)$) de lumière mesurée par le photodétecteur (7) et d'une constante prédéterminée ($\alpha_1$, $\alpha_2$, $\alpha_3$) dépendant uniquement du scintillateur (4), du rendement lumineux (a) du dispositif de détermination (1) et du type du rayonnement ionisant.

2. Dispositif de détermination (1) selon la revendication 1, dans lequel l'analyseur (10) est configuré pour déterminer :

   - la dose d'ionisation ($D_{ion}(E)$) déposée dans le scintillateur (4) par le rayonnement ionisant par application de la formule suivante : $D_{ion}(E) = \alpha_1 \times I_{totale}(E)$, où E est l'énergie du rayonnement ionisant incident, $I_{totale}(E)$ est l'intensité totale de lumière mesurée par le photodétecteur (7) et $\alpha_1$ est une constante prédéterminée dépendant uniquement du scintillateur (4), du rendement lumineux (a) du dispositif de détermination (1) et du type du rayonnement ionisant; et/ou
   - la dose d'excitation ($D_{exc}(E)$) déposée dans le scintillateur (4) par application de la formule suivante : $D_{exc}(E) = \alpha_2 \times I_{totale}(E)$, où E est l'énergie du rayonnement incident, $I_{totale}(E)$ est l'intensité totale de lumière mesurée par le photodétecteur (7) et $\alpha_2$ est une constante prédéterminée dépendant uniquement du scintillateur (4), du rendement lumineux (a) du dispositif de détermination (1) et du type du rayonnement ionisant; et/ou
   - la dose totale ($D_{totale}(E)$) déposée dans le scintillateur (4) par application de la formule suivante : $D_{totale}(E) = \alpha_3 \times I_{totale}(E)$, où E est l'énergie du rayonnement incident, $I_{totale}(E)$ est l'intensité totale de lumière mesurée par le photodétecteur (7) et $\alpha_3$ est une constante prédéterminée dépendant uniquement du scintillateur (4), du rendement lumineux (a) du dispositif de détermination (1) et du type du rayonnement ionisant.

3. Dispositif de détermination (1) selon la revendication 2, dans lequel, pour un type de rayonnement ionisant considéré, la constante $\alpha_1$ correspond à la pente d'une droite d'étalonnage établie, pour le type de rayonnement ionisant considéré et pour ledit dispositif de détermination (1), et donnant la dose d'ionisation ($D_{ion}(E)$) mesurée pour ledit scintillateur (4) au moyen d'une chambre d'ionisation en fonction de l'intensité totale ($I_{totale}(E)$) mesurée, pour le même scintillateur (4), à l'aide du dispositif de détermination (1).

4. Dispositif de détermination (1) selon la revendication 2 ou 3, dans laquelle la constante $\alpha_2$ prédéterminée

est calculée par application de la formule suivante :

$$\alpha_2 = \left( \frac{1}{\rho V Q a} - \alpha_1 \right),$$ où $\rho$ est la masse volumique du scintillateur 4, exprimée en $kg/m^3$, V est le volume irradié du scintillateur (4), exprimé en $m^3$, Q est le rendement total de fluorescence exprimé en nombre total de photons de fluorescence émis par le scintillateur (4) par unité d'énergie déposée, soit en $J^{-1}$ et $\alpha_1$ est une constante correspondant à la pente d'une droite d'étalonnage établie, pour le type de rayonnement ionisant considéré et pour ledit dispositif de détermination (1), et donnant la dose d'ionisation ($D_{ion}(E)$) mesurée pour ledit scintillateur (4) au moyen d'une chambre d'ionisation en fonction de l'intensité totale ($I_{totale}(E)$) mesurée, pour le même scintillateur (4), à l'aide du dispositif de détermination (1).

5. Dispositif de détermination selon l'une des revendications 2 à 4, dans laquelle la constante $\alpha_3$ prédéterminée est déterminée par application de la formule suivante : $\alpha_3 = (\alpha_1 + \alpha_2)$ où la constante $\alpha_2$ prédéterminée est calculée par application de la formule

suivante : $$\alpha_2 = \left( \frac{1}{\rho V Q a} - \alpha_1 \right),$$ où $\rho$ est la masse volumique du scintillateur (4), exprimée en $kg/m^3$, V est le volume irradié du scintillateur (4), exprimé en $m^3$, Q est le rendement total de fluorescence exprimé en nombre total de photons de fluorescence émis par le scintillateur (4) par unité d'énergie déposée, soit en $J^{-1}$ et $\alpha_1$ est une constante correspondant à la pente d'une droite d'étalonnage établie, pour le type de rayonnement ionisant considéré et pour ledit dispositif de détermination (1), et donnant la dose d'ionisation ($D_{ion}(E)$) mesurée pour ledit scintillateur (4) au moyen d'une chambre d'ionisation en fonction de l'intensité totale ($I_{totale}(E)$) mesurée, pour le même scintillateur (4), à l'aide du dispositif de détermination (1).

6. Dispositif de détermination (1) selon l'une quelconque des revendications précédentes, dans lequel le dispositif de mesure comprend en outre un atténuateur (13, 16) destiné à atténuer le rayonnement incident sur le photodétecteur (7) de sorte à assurer le fonctionnement du photodétecteur (7) en régime de comptage de photon unique.

7. Dispositif selon la revendication 6, dans lequel l'atténuateur (13, 16) comprend :

   - un atténuateur amont (16), disposé en amont du scintillateur (4) et configuré pour absorber une partie du rayonnement ionisant incident sur le scintillateur (4) ; et/ou
- un atténuateur aval (13), disposé en aval du scintillateur (4), entre le scintillateur (4) et le photodétecteur (7) et configuré pour absorber une partie du rayonnement émis par le scintillateur (4) en direction du photodétecteur (7).

8. Dispositif de détermination (1) selon la revendication 6 ou 7, dans lequel l'atténuateur (13, 16) comprend un élément réalisé dans un matériau propre à absorber le rayonnement ionisant incident, ledit élément étant disposé en amont du scintillateur (4) sur le trajet du rayonnement incident sur le scintillateur (4).

9. Dispositif de détermination (1) selon la revendication 8, dans lequel l'atténuateur (13, 16) comprend un diaphragme disposé à l'entrée du photodétecteur (7), l'ouverture physique du diaphragme présentant une aire inférieure à celle de l'ouverture physique du photodétecteur (7).

10. Dispositif de détermination (1) selon l'une quelconque des revendications précédentes, dans lequel le scintillateur (4) est un scintillateur organique, de préférence réalisé en p-terphényle ou en anthracène.

11. Dispositif de détermination (1) selon l'une quelconque des revendications précédentes, lequel comprend en outre un organe de transmission (12), configuré pour transmettre les photons de scintillation émis par le scintillateur (4) jusqu'au photodétecteur (7), ledit organe de transmission (15) comprenant de préférence une fibre optique reliant le scintillateur (4) au photodétecteur (7).

12. Procédé de détermination d'une dose déposée dans un scintillateur (4) par un rayonnement ionisant au moyen d'un dispositif de détermination (1) selon l'une quelconque des revendications 1 à 11, comprenant :

   - la mesure, au moyen d'un unique photodétecteur (7) fonctionnant en régime de comptage de photon unique et à faible bruit, de l'intensité totale ($I_{totale}(E)$) de lumière reçue par le photodétecteur (7) ;
   - la détermination, au moyen d'un analyseur (10), d'une dose déposée dans le scintillateur (4) par le rayonnement ionisant uniquement à partir de l'intensité totale de lumière ($I_{totale}(E)$) mesurée par le photodétecteur (7) unique et d'une constante prédéterminée dépendant uniquement du scintillateur (4), du rendement lumineux (a) du dispositif de détermination (1) et du type du rayonnement ionisant.

13. Procédé de détermination selon la revendication 12, dans lequel l'étape de détermination comprend :

   - la détermination de la dose d'ionisation ($D_{ion}(E)$) déposée dans le scintillateur (4) par le rayonnement ionisant par application de la formule suivante :

$$D_{ion}(E) = \alpha_1 \times I_{totale}(E)$$

où

   $\alpha_1$ est une constante prédéterminée dépendant uniquement du scintillateur (4), du rendement lumineux (a) du dispositif de détermination (1) et du type du rayonnement ionisant;
   $I_{totale}(E)$ est l'intensité totale de lumière mesurée par le photodétecteur (7) ;
   et/ou

   - la détermination de la dose d'excitation ($D_{exc}(E)$) déposée dans le scintillateur (4) par le rayonnement ionisant par application de la formule suivante :
   $D_{exc}(E) = \alpha_2 \times I_{totale}(E)$, où $I_{totale}(E)$ est l'intensité totale mesurée par le photodétecteur (7) et $\alpha_2$ est une constante prédéterminée dépendant uniquement du scintillateur (4), du rendement lumineux (a) du dispositif de détermination (1) et du type du rayonnement ionisant ;
   et/ou
   - la détermination de la dose totale ($D_{totale}(E)$) déposée dans le scintillateur (4) par le rayonnement ionisant par application de la formule suivante :

$$D_{totale}(E) = \alpha_3 \times I_{totale}(E),$$

où

   $I_{totale}(E)$ est l'intensité totale de lumière mesurée par le photodétecteur (7) ; et
   $\alpha_3$ est une constante prédéterminée dépendant uniquement du scintillateur (4), du rendement lumineux (a) du dispositif de détermination (1) et du type du rayonnement ionisant.

**Patentansprüche**

1. Vorrichtung (1) zum Bestimmen einer in einem Szintillator (4) durch ionisierende Strahlung deponierten Dosis, umfassend:

- einen Szintillator (4), der konfiguriert ist, um mit ionisierender Strahlung bestrahlt zu werden, und der angepasst ist, um Szintillationsphotonen bei Wechselwirkung mit der ionisierenden Strahlung zu emittieren;
- eine Messvorrichtung, umfassend einen einzelnen Photodetektor (7), wobei der Photodetektor (7) ein rauscharmer Photodetektor ist, wobei die Bestimmungsvorrichtung (1) so konfiguriert ist, dass der Photodetektor (7) in einem Einzelphotonenzählmodus arbeitet, wobei der Photodetektor (7) an seinem Ausgang ein Maß für die Gesamtintensität ($I_{gesamt}(E)$) des vom Photodetektor (7) aus dem Szintillator (4) empfangenen Lichts liefert; und
- einen Analysator (10), der konfiguriert ist, um eine in dem Szintillator (4) durch die ionisierende Strahlung deponierte Dosis allein aus der von dem Photodetektor (7) gemessenen Gesamtintensität ($I_{gesamt}(E)$) des Lichts und einer vorbestimmten Konstante ($\alpha_1$, $\alpha_2$, $\alpha_3$) zu bestimmen, die allein von dem Szintillator (4), der Lichtleistung (a) der Bestimmungseinrichtung (1) und der Art der ionisierenden Strahlung abhängt.

2. Bestimmungsvorrichtung (1) nach Anspruch 1, wobei der Analysator (10) konfiguriert ist, um Folgendes zu bestimmen:

- die durch die ionisierende Strahlung im Szintillator (4) deponierte Ionisationsdosis ($D_{ion}(E)$) durch Anwendung der folgenden Formel: $D_{ion}(E) = \alpha_1 \times I_{gesamt}(E)$, wobei E die Energie der einfallenden ionisierenden Strahlung, $I_{gesamt}(E)$ die vom Photodetektor (7) gemessene Gesamtlichtintensität und $\alpha_1$ eine vorbestimmte Konstante ist, die nur von dem Szintillator (4), der Lichtleistung (a) der Bestimmungseinrichtung (1) und der Art der ionisierenden Strahlung abhängt; und/oder
- die im Szintillator (4) deponierte Anregungsdosis ($D_{anr}(E)$) durch Anwendung der folgenden Formel: $D_{anr}(E) = \alpha_2 \times I_{gesamt}(E)$, wobei E die Energie der einfallenden Strahlung, $I_{gesamt}(E)$ die vom Photodetektor (7) gemessene Gesamtlichtintensität und $\alpha_2$ eine vorbestimmte Konstante ist, die nur von dem Szintillator (4), der Lichtleistung (a) der Bestimmungseinrichtung (1) und der Art der ionisierenden Strahlung abhängt; und/oder
- die im Szintillator (4) deponierte Gesamtdosis ($D_{gesamt}(E)$) durch Anwendung der folgenden Formel: $D_{gesamt}(E) = \alpha_3 \times I_{gesamt}(E)$, wobei E die Energie der einfallenden Strahlung, $I_{gesamt}(E)$ die vom Photodetektor (7) gemessene Gesamtlichtintensität und $\alpha_3$ eine vorbestimmte Konstante ist, die nur von dem Szintillator (4), der Lichtleistung (a) der Bestimmungseinrichtung (1) und der Art der ionisierenden Strahlung abhängt.

3. Bestimmungsvorrichtung (1) nach Anspruch 2, wobei für eine betrachtete Art von ionisierender Strahlung die Konstante $\alpha_1$ der Steigung einer für die betrachtete Art von ionisierender Strahlung und für die Bestimmungsvorrichtung (1) festgelegten Kalibriergeraden entspricht, und wobei die für den Szintillator (4) mittels einer Ionisationskammer gemessene Ionisationsdosis ($D_{ion}(E)$) in Abhängigkeit von der für denselben Szintillator (4) unter Verwendung der Bestimmungsvorrichtung (1) gemessenen Gesamtintensität ($I_{gesamt}(E)$) angegeben wird.

4. Bestimmungsvorrichtung (1) nach Anspruch 2 oder 3, wobei für eine betrachtete Art von ionisierender Strahlung die vorbestimmte Konstante $\alpha_2$ durch Anwendung der folgenden Formel berechnet wird:

$$\alpha_2 = \left( \frac{1}{\rho V Q a} - \alpha_1 \right),$$ wobei $\rho$ die Dichte des Szintillators (4), ausgedrückt in kg/m$^3$, ist, V das bestrahlte Volumen des Szintillators (4), ausgedrückt in m$^3$, ist, Q die Gesamtfluoreszenzeffizienz, ausgedrückt als die Gesamtzahl der vom Szintillator (4) pro Einheit der deponierten Energie emittierten Fluoreszenzphotonen ist, d. h. in J$^{-1}$, und $\alpha_1$ eine Konstante ist, die der Steigung einer festgelegten Kalibrierungslinie für die Art der betrachteten ionisierenden Strahlung und für die Bestimmungsvorrichtung (1) entspricht, und die die für den Szintillator (4) mittels einer Ionisationskammer gemessene Ionisationsdosis ($D_{ion}(E)$) in Abhängigkeit von der für denselben Szintillator (4) mittels der Bestimmungsvorrichtung (1) gemessenen Gesamtintensität ($I_{gesamt}(E)$) angibt.

5. Bestimmungsvorrichtung nach einem der Ansprüche 2 bis 4, wobei die vorbestimmte Konstante $\alpha_3$ durch Anwendung der folgenden Formel bestimmt wird: $\alpha_3 = (\alpha_1 + \alpha_2)$, wobei die vorbestimmte Konstante $\alpha_2$ durch Anwendung der folgenden Formel berechnet wird:

$$\alpha_2 = \left( \frac{1}{\rho V Q a} - \alpha_1 \right),$$ wobei $\rho$ die Dichte des

Szintillators (4), ausgedrückt in kg/m$^3$, ist, V das bestrahlte Volumen des Szintillators (4), ausgedrückt in m$^3$, ist, Q die Gesamtfluoreszenzeffizienz, ausgedrückt als die Gesamtzahl der vom Szintillator (4) pro Einheit der deponierten Energie emittierten Fluoreszenzphotonen ist, d. h. in J$^{-1}$, und $\alpha_1$ eine Konstante ist, die der Steigung einer festgelegten Kalibrierungslinie für die Art der betrachteten ionisierenden Strahlung und für die Bestimmungsvorrichtung (1) entspricht, und die die für den Szintillator (4) mittels einer Ionisationskammer gemessene Ionisationsdosis ($D_{ion}(E)$) in Abhängigkeit von der für denselben Szintillator (4) mittels der Bestimmungsvorrichtung (1) gemessenen Gesamtintensität ($I_{gesamt}(E)$) angibt.

6. Bestimmungsvorrichtung (1) nach einem der vorhergehenden Ansprüche, wobei die Messvorrichtung ferner ein Dämpfungsglied (13, 16) zum Dämpfen von auf den Photodetektor (7) einfallender Strahlung umfasst, um den Betrieb des Photodetektors (7) in einem Einzelphotonenzählmodus sicherzustellen.

7. Vorrichtung nach Anspruch 6, wobei das Dämpfungsglied (13, 16) umfasst:

    - ein vorgelagertes Dämpfungsglied (16), das dem Szintillator (4) vorgelagert und so konfiguriert ist, dass es einen Teil der auf den Szintillator (4) einfallenden ionisierenden Strahlung absorbiert; und/oder
    - ein nachgelagertes Dämpfungsglied (13), das dem Szintillator (4) nachgelagert zwischen dem Szintillator (4) und dem Photodetektor (7) angeordnet und konfiguriert ist, um einen Teil der von dem Szintillator (4) in Richtung des Photodetektors (7) emittierten Strahlung zu absorbieren.

8. Bestimmungsvorrichtung (1) nach Anspruch 6 oder 7, wobei das Dämpfungsglied (13, 16) ein Element aus einem Material umfasst, das in der Lage ist, einfallende ionisierende Strahlung zu absorbieren, wobei das Element dem Szintillator (4) vorgelagert im Weg der auf den Szintillator (4) einfallenden Strahlung angeordnet ist.

9. Bestimmungsvorrichtung (1) nach Anspruch 8, wobei das Dämpfungsglied (13, 16) eine am Eingang des Photodetektors (7) angeordnete Blende umfasst, wobei die physische Öffnung der Blende eine kleinere Fläche als die physische Öffnung des Photodetektors (7) aufweist.

10. Bestimmungsvorrichtung (1) nach einem der vorhergehenden Ansprüche, wobei der Szintillator (4) ein organischer Szintillator, vorzugsweise aus p-Terphenyl oder Anthracen, ist.

11. Bestimmungsvorrichtung (1) nach einem der vorhergehenden Ansprüche, die ferner ein Übertragungselement (12) umfasst, das so konfiguriert ist, dass es die vom Szintillator (4) emittierten Szintillationsphotonen zum Photodetektor (7) überträgt, wobei das Übertragungselement (15) vorzugsweise eine optische Faser umfasst, die den Szintillator (4) mit dem Photodetektor (7) verbindet.

12. Verfahren zum Bestimmen einer in einem Szintillator (4) durch ionisierende Strahlung deponierten Dosis mittels einer Bestimmungsvorrichtung (1) nach einem der Ansprüche 1 bis 11, umfassend:

    - die Messung der Gesamtintensität ($I_{gesamt}(E)$) des von dem Photodetektor (7) empfangenen Lichts mittels eines einzelnen Photodetektors (7), der in einem Einzelphotonenzählmodus und mit geringem Rauschen arbeitet;
    - die Bestimmung einer im Szintillator (4) durch ionisierende Strahlung deponierten Dosis mittels eines Analysators (10) allein aus der vom einzelnen Photodetektor (7) gemessenen Gesamtlichtintensität ($I_{gesamt}(E)$) und einer vorbestimmten Konstante, die allein vom Szintillator (4), der Lichtleistung (a) der Bestimmungsvorrichtung (1) und der Art der ionisierenden Strahlung abhängt.

13. Bestimmungsverfahren nach Anspruch 12, wobei der Bestimmungsschritt umfasst:

    - die Bestimmung der in dem Szintillator (4) durch ionisierende Strahlung deponierten Ionisierungsdosis ($D_{ion}(E)$) durch Anwendung der folgenden Formel:

$$D_{ion}(E) = \alpha_1 \times I_{gesamt}(E),$$

    wobei

        $\alpha_1$ eine vorbestimmte Konstante ist, die nur von dem Szintillator (4), der Lichtleistung (a) der Bestimmungsvorrichtung (1) und der Art der ionisierenden Strahlung abhängt; $I_{gesamt}(E)$ die Gesamtlichtintensität ist, die von dem Photodetektor (7) gemessen wird; und/oder

    - die Bestimmung der im Szintillator (4) durch ionisierende Strahlung deponierten Anregungsdosis ($D_{anr}(E)$) durch Anwendung der folgenden Formel:
    $D_{anr}(E) = \alpha_2 \times I_{gesamt}(E)$, wobei $I_{gesamt}(E)$ die vom Photodetektor (7) gemessene Gesamtintensität ist und $\alpha_2$ eine vorbestimmte Konstante ist, die nur von dem Szintillator (4), der Lichtleistung (a) der Bestimmungsvorrichtung (1) und der Art der ionisierenden Strahlung abhängt; und/oder
    - die Bestimmung der im Szintillator (4) durch ionisierende Strahlung deponierten Gesamtdosis ($D_{gesamt}(E)$) durch Anwendung der folgenden Formel:

$$D_{gesamt}(E) = \alpha_3 \times I_{gesamt}(E),$$

wobei

$I_{gesamt}(E)$ die vom Photodetektor (7) gemessene Gesamtlichtintensität ist; und $\alpha_3$ eine vorbestimmte Konstante ist, die nur vom Szintillator (4), der Lichtleistung (a) der Bestimmungsvorrichtung (1) und der Art der ionisierenden Strahlung abhängt.

**Claims**

1. Device (1) for determining a dose deposited in a scintillator (4) by ionizing radiation, comprising:

   - a scintillator (4) designed to be irradiated by the ionizing radiation and suitable for emitting scintillation photons during interaction with the ionizing radiation;
   - a measuring device comprising a single photodetector (7), said photodetector (7) being a low-noise photodetector, the determination device (1) being designed such that the photodetector (7) operates in a single-photon counting mode, the photodetector (7) providing, at its output, a measurement of the total intensity ($I_{totale}(E)$) of light received by the photodetector (7) from the scintillator (4); and
   - an analyzer (10) designed to determine a dose deposited in the scintillator (4) by the ionizing radiation from only the total intensity ($I_{totale}(E)$) of light measured by the photodetector (7) and a predetermined constant ($\alpha_1$, $\alpha_2$, $\alpha_3$) depending only on the scintillator (4), the light output (a) of the determination device (1) and the type of ionizing radiation.

2. Determination device (1) according to claim 1, wherein the analyzer (10) is designed to determine:

   - the ionization dose ($D_{ion}(E)$) deposited in the scintillator (4) by the ionizing radiation by applying the following formula: $D_{ion}(E) = \alpha_1 \times I_{totale}(E)$, where E is the energy of the incident ionizing radiation, $I_{totale}(E)$ is the total intensity of light measured by the photodetector (7) and $\alpha_1$ is a predetermined constant depending only on the scintillator (4), the light output (a) of the determination device (1) and the type of ionizing radiation; and/or
   - the excitation dose ($D_{exc}(E)$) deposited in the scintillator (4) by applying the following formula:

   $D_{exc}(E) = \alpha_2 \times I_{totale}(E)$, where E is the energy of the incident radiation, $I_{totae}(E)$ is the total intensity of light measured by the photodetector (7) and $\alpha_2$ is a predetermined constant depending only on the scintillator (4), the light output (a) of the determination device (1) and the type of ionizing radiation; and/or
   - the total dose ($D_{totale}(E)$) deposited in the scintillator (4) by applying the following formula: $D_{totale}(E) = \alpha_3 \times I_{totale}(E)$, where E is the energy of the incident radiation, $I_{totale}(E)$ is the total intensity of light measured by the photodetector (7) and $\alpha_3$ is a predetermined constant depending only on the scintillator (4), the light output (a) of the determination device (1) and the type of ionizing radiation.

3. Determination device (1) according to claim 2, wherein, for one type of ionizing radiation in question, the constant $\alpha_1$ corresponds to the slope of a calibration line, established for the type of ionizing radiation in question and for said determination device (1), which gives the ionization dose ($D_{ion}(E)$) measured for said scintillator (4) by means of an ionization chamber on the basis of the total intensity ($I_{totale}(E)$) measured for the same scintillator (4) by means of the determination device (1).

4. Determination device (1) according to either claim 2 or claim 3, wherein the predetermined constant $\alpha_2$ is calculated by applying the following formula:

$$\alpha_2 = \left( \frac{1}{\rho V Q a} - \alpha_1 \right),$$ where $\rho$ is the density of the scintillator 4 expressed in kg/m$^3$, V is the irradiated volume of the scintillator (4) expressed in m$^3$, Q is the total fluorescence expressed as the total number of fluorescence photons emitted by the scintillator (4) per unit of energy deposited, in J$^{-1}$, and $\alpha_1$ is a constant corresponding to the slope of a calibration line, established for the type of ionizing radiation in question and for said determination device (1), which gives the ionization dose ($D_{ion}(E)$) measured for said scintillator (4) by means of an ionization chamber on the basis of the total intensity ($I_{totale}(E)$) measured for the same scintillator (4) by means of the determination device (1).

5. Determination device according to any of claims 2 to 4, wherein the predetermined constant $\alpha_3$ is determined by applying the following formula: $\alpha_3 = (\alpha_1 + \alpha_2)$, where the predetermined constant $\alpha_2$ is calculated by applying the following formula:

$$\alpha_2 = \left( \frac{1}{\rho V Q a} - \alpha_1 \right),$$ where $\rho$ is the density of the scintillator (4) expressed in kg/m$^3$, V is the irradiated volume of the scintillator (4) expressed in m$^3$, Q is the total fluorescence expressed as the total number of fluorescence photons emitted by the scintillator (4) per unit of energy deposited, in J$^{-1}$, and $\alpha_1$ is a constant corresponding to the slope of an calibration line, established for the type of ionizing radiation in question and for said determination device (1), which gives the ionization dose ($D_{ion}(E)$) measured for said scintillator (4) by means of an ionization chamber on the basis of the total intensity ($I_{totale}(E)$) measured for the same scintillator (4) by means of the determination device (1).

6. Determination device (1) according to any of the preceding claims, wherein the measuring device further comprises an attenuator (13, 16) intended to attenuate the radiation incident on the photodetector (7) so as to ensure the operation of the photodetector (7) in single-photon counting mode.

7. Device according to claim 6, wherein the attenuator (13, 16) comprises:

    - an upstream attenuator (16) which is arranged upstream of the scintillator (4) and designed to absorb part of the ionizing radiation incident on the scintillator (4); and/or
    - a downstream attenuator (13) which is arranged downstream of the scintillator (4) between the scintillator (4) and the photodetector (7), and is designed to absorb part of the radiation emitted by the scintillator (4) toward the photodetector (7).

8. Determination device (1) according to either claim 6 or claim 7, wherein the attenuator (13, 16) comprises an element made of a material suitable for absorbing the incident ionizing radiation, said element being arranged upstream of the scintillator (4) on the path of the radiation incident on the scintillator (4).

9. Determination device (1) according to claim 8, wherein the attenuator (13, 16) comprises a diaphragm arranged at the input of the photodetector (7), the physical opening of the diaphragm having an area smaller than that of the physical opening of the photodetector (7).

10. Determination device (1) according to any of the preceding claims, wherein the scintillator (4) is an organic scintillator, preferably made of p-terphenyl or anthracene.

11. Determination device (1) according to any of the preceding claims, which further comprises a transmission member (12) designed to transmit the scintillation photons emitted by the scintillator (4) to the photodetector (7), said transmission member (15) preferably comprising an optical fiber connecting the scintillator (4) to the photodetector (7).

12. Method for determining a dose deposited in a scintillator (4) by ionizing radiation by means of a determination device (1) according to any of claims 1 to 11, comprising:

    - measuring, by means of a single photodetector (7) operating in a low-noise single-photon counting mode, the total intensity ($I_{totale}(E)$) of light received by the photodetector (7);
    - determining, by means of an analyzer (10), a dose deposited in the scintillator (4) by the ionizing radiation only from the total intensity of light($I_{totale}(E)$) measured by the single photodetector (7) and a predetermined constant depending only on the scintillator (4), the light output (a) of the determination device (1) and the type of ionizing radiation.

13. Determination method according to claim 12, wherein the determination step comprises:

    - determining the ionization dose ($D_{ion}(E)$) deposited in the scintillator (4) by the ionizing radiation by applying the following formula:

    $$D_{ion}(E) = \alpha_1 \times I_{totale}(E)$$

    where

        $\alpha_1$ is a predetermined constant depending only on the scintillator (4), the light output (a) of the determination device (1) and the type of ionizing radiation;
        $I_{totale}(E)$ is the total intensity of light measured by the photodetector (7);
        and/or

    - determining the excitation dose ($D_{exc}(E)$) deposited in the scintillator (4) by the ionizing radiation by applying the following formula:
    $D_{exc}(E) = \alpha_2 \times I_{totale}(E)$, where $I_{totale}(E)$ is the total intensity measured by the photodetector (7) and $\alpha_2$ is a predetermined constant depending only on the scintillator (4), the light output (a) of the determination device (1) and the type of ionizing radiation;
    and/or
    - determining the total dose ($D_{totale}(E)$) deposited in the scintillator (4) by the ionizing radiation by applying the following formula:

$$D_{totale}(E) = \alpha_3 \times I_{totale}(E),$$

where

$I_{totale}(E)$ is the total intensity of light measured by the photodetector (7); and
$\alpha_3$ is a predetermined constant depending only on the scintillator (4), the light output (a) of the determination device (1) and the type of ionizing radiation.

11

1

16 18 4

12

29

22

27

7

13

26

25

24

## FIG.1

7 $I_{totale}$

$\alpha_1, \alpha_2, a, \alpha_3$

28

10

$D_{ion}$

$D_{exc}$

$D_{totale}$

## FIG.2

## FIG.3

FIG.4

EP 3 374 801 B1

**RÉFÉRENCES CITÉES DANS LA DESCRIPTION**

**Documents brevets cités dans la description**

- EP 2771716 A